(19) Europäisches Patentamt

European Patent Office

Office européen des brevets

(11) Veröffentlichungsnummer : **0 277 542 B1**

(12) # EUROPÄISCHE PATENTSCHRIFT

(45) Veröffentlichungstag der Patentschrift :
20.03.91 Patentblatt 91/12

(51) Int. Cl.⁵ : **G01B 11/14**

(21) Anmeldenummer : **88100729.8**

(22) Anmeldetag : **20.01.88**

(54) Optoelektronischer Abstandssensor.

(30) Priorität : **05.02.87 DE 3703422**

(43) Veröffentlichungstag der Anmeldung :
**10.08.88 Patentblatt 88/32**

(45) Bekanntmachung des Hinweises auf die
Patenterteilung :
**20.03.91 Patentblatt 91/12**

(84) Benannte Vertragsstaaten :
**DE GB SE**

(56) Entgegenhaltungen :
**EP-A- 0 156 991
US-A- 4 325 639
US-A- 4 479 717
US-A- 4 630 927**

(73) Patentinhaber : **Firma Carl Zeiss
W-7920 Heidenheim (Brenz) (DE)
DE SE**
Patentinhaber : **CARL ZEISS-STIFTUNG
HANDELND ALS CARL ZEISS
W-7920 Heidenheim (Brenz) (DE)
GB**

(72) Erfinder : **Breyer, Karl-Hermann, Dr.
Hans-Holbein-Strasse 51
W-7920 Heidenheim (DE)**
Erfinder : **Koch, Klaus Peter, Dr.
Himmlinger Weg 50
W-7080 Aalen (DE)**

## Beschreibung

Die Erfindung betrifft einen nach dem Triangulationsprinzip arbeitenden Abstandssensor mit einer Lichtquelle für den Meßstrahl und einem positionsempfindlichen photoelektrischen Empfänger in dem zum Meßstrahl geneigten Abbildungsstrahlengang. Solche oft auch als "optischer Tastkopf" oder "berührungsloser Taster" bezeichnete Abstandssensoren, wie sie z.B. in der EP-A1-015 69 91 oder der EP-A1-016 33 47 beschrieben sind, werden beispielsweise in der Koordinatenmeßtechnik zur Vermessung bzw. Abtastung von Werkstücken eingesetzt.

Die meisten der bekannten Abstandssensoren besitzen eine Infrarot-Laserdiode zur Erzeugung des Meßlichtstrahles, um auf dem Werkstück, das vermessen werden soll, einen Spot mit möglichst kleinen Abmessungen zu erzeugen. Dieser Meßspot wird dann über den im Winkel zum Meßlichtstrahl ausgerichteten Abbildungsstrahlengang auf den Detektor abgebildet und aus der Lage des Spotbildes auf dem Detektor wird auf elektronischem Wege der Abstand zum Meßobjekt ermittelt.

Bei der auch als "Teach in" bezeichneten Einrichtung des Abstandssensors auf die Werkstückoberfläche vor dem eigentlichen Meßvorgang hat die Bedienperson für das Koordinatenmeßgerät unter anderem folgende Aufgaben durchzuführen :

a) Der Sensor muß in einem vorbestimmten Abstand zum Meßobjekt gebracht werden, so daß sich die Oberfläche des Meßobjektes etwa in der Mitte des Meßbereiches des Sensors befindet.

b) Der vom Sensor erzeugte Meßspot wird an der für den Beginn der Messungen vorgesehenen Stelle auf dem Meßobjekt positioniert.

c) Außerdem muß sichergestellt werden, daß keine Hindernisse den Abbildungsstrahlengang des Sensors abschatten,

Abstandssensoren, die zur Erzeugung des Meßspots eine im nicht sichtbaren Spektralbereich emittierende Lichtquelle wie z.B. eine IR-Laserdiode benutzen, bereiten hier Probleme, Denn um den Meßspot für die Bedienperson sichtbar zu machen, damit die o.g. Arbeiten durchgeführt werden können, sind zusätzliche hilfsmittel wie z.B. ein sogenannter IR-Viewer nötig. Aber selbst wenn der vom Sensor projezierte Meßspot sichtbar ist, bestehen hinsichtlich der Durchführung der oben genannten Punkte a) und c) noch immer Schwierigkeiten, da nicht sicher erkannt werden kann, wann und in welchem Umfange der Abbildungsstrahlengang z.B. durch Kanten und andere Unregelmäßigkeiten in der Oberfläche des Werkstückes bzw. Meßobjekts abgeschattet wird.

Es ist die Aufgabe der vorliegenden Erfindung einen Abstandssensor der eingangs genannten Art so auszubilden, daß der Einrichtvorgang für das Bedienpersonal erleichtert wird,

Diese Aufgabe wird geläst durch eine Vorrichtung mit den im Anspruch 1 augegebenen Merkmalen.

Mit dieser Maßnahme lassen sich Abschattungen des Abbildungsstrahlenganges sicher erkennen und vermeiden, was der Geschwindigkeit des Einrichtvorganges zugute kommt, Außerdem ist dann, wenn der Meßstrahl selbst sichtbar oder auch dem Meßlichtstrahl ein eigener sichtbarer Pilotstrahl überlagert ist, es auf einfache Weise möglich, den Abstand zwischen Sensor und Meßobjekt korrekt einzustellen (siehe Punkt a) des Einrichtvorganges.

Dem Abbildungsstrahlengang kann ein einziger Pilotstrahl überlagert sein, der z.B. die Mitte des Meßbereiches des Sensors kenntlich macht, oder mehrere Pilotstrahlen, z.B. zwei, mit denen die Ränder des Meßbereiches sichtbar gemacht werden. Der Pilotstrahl kann außerdem die Form eines den gesamten Meßbereich überdeckenden Strahlfächers besitzen. Ein solcher Strahlfächer läßt sich durch Aufweitung des Strahles mit Hilfe einer Zylinderlinse erzeugen.

Die beiden letztgenannten Möglichkeiten sind insbesondere bei der Einrichtung des Sensors für den Scanbetrieb geeignet, in dem der Sensor nicht auf eine genau vorbestimmte Entfernung eingestellt wird, sondern wo nur gefordert wird, daß sich das Meßobjekt mit Sicherheit innerhalb des Meßbereiches des Sensors befindet,

Zur Erzeugung der Pilotstrahlen können alle üblichen Lichtquellen, wie z.B. Glühlampen mit oder ohne Farbfilter, Leuchtdioden oder Laserlichtquellen mit entsprechender Projektionsoptik eingesetzt werden. Dabei ist es vorteilhaft dann, wenn mit mehreren Pilotstrahlen gearbeitet wird, diese farblich abzustufen.

Nachstehend werden anhand der Figuren 1-4 der beigefügten Zeichnungen Ausführungsbeispiele der Erfindung näher beschriebem.

Figur 1a Ist eine Prinzipskizze, die den optischen Aufbau eines Ausführungsbeispiels des Abstandssensors im Schnitt in einer ersten Position über einem Meßobjekt zeigt ;

Figur 1b zeigt den sichtbaren Auftreffpunkt der Pilotstrahlen (P6), (P7) aus Figur 1a auf dem Meßobjekt (18) aus Figur 1a ;

Figur 2a stellt den Sensor aus Figur 1a in einer zweiten Position über dem Meßobjekt (10) dar ;

Figur 2b zeigt die Auftreffpunkte der Pilotstrahlen (P6), (P7) in dieser zweiten Position ;

Figur 3 ist die Prinzipskizze eines zweiten Ausführungsbeispiels des Abstandssensors ;

Figur 4 ist die Prinzipskizze eines dritten Ausführungsbeispiels.

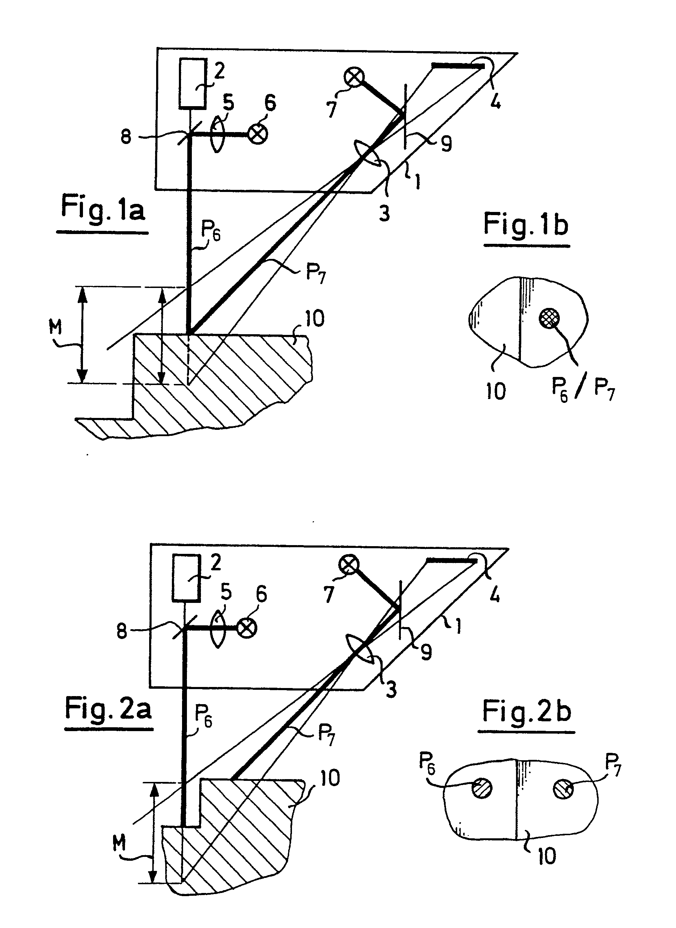

Der in Figur 1 in einer stark vereinfachten Prinzipskizze dargestellte Abstandssensor besteht aus folgenden Bauteilen : Einer Infrarot-Laserdiode (2) mit aufgesetzter Kollimationsoptik, von der der Meßstrahl ausgeht, der beim Auftreffen auf das zu vermessende Werkstück (10) einen Meßspot mit möglichst geringen Abmessungen erzeugt. Der Durchmesser dieses Meßspots beträgt typisch wenige hundert Mikrometer.

Der Abstandssensor enthält außerdem ein Objektiv (3), das den mit M bezeichneten Meßbereich unter Einhaltung der Scheimpflugbedingung auf einen positionsempfindlichen photoelektrischen Detektor (4) wie z.B. eine Diodenzeile oder ein sogenanntes CCD-Array abbildet, Oer Meßstrahl und der Abbildungsstrahlengang sind gegeneinander geneigt (Triangulation).

Die genannten optischen Komponenten sowie die hier nicht dargestellte Elektronik u.a. zur Ansteuerung und Signalverarbeitung des Detektors (4) sind in einem mit (1) bezeichneten, gemeinsamen Gehäuse untergebracht, das z.B. an der Pinole eines Koordinatenmeßgerätes befestigt werden kann.

Gemäß der Erfindung enthält der Abstandssensor (1) zwei weitere Lichtquellen (6) und (7). Hierbei handelt es sich um Leuchtdioden, die im sichtbaren Spektralbereich emittieren, also beispielsweise rot und grün. Der über einen Kollektor (5) gebündelte Strahl der Leuchtdiode (6) ist mit Hilfe eines ersten dichroitischen Strahlteilers (8) dem Meßstrahl koaxial überlagert, und das von der Leuchtdiode (7) ausgehende Licht ist mit Hilfe eines zweiten dichroitischen Strahlteilers (9) dem Abbildungsstrahlengang überlagert. Hierbei ist die Leuchtdiode (7) so angeordnet, daß in Verbindung mit dem bereits vorhandenen Objektiv (3) eine Abbildung der Leuchtdiode (7) in die Mitte des Meßbereiches M erfolgt.

Die mit diesen Maßnahmen erzeugten Pilotstrahlen (P6) und (P7) dienen als Einstellhilfe, wie eingangs beschrieben den Sensor (1) relativ zu dem zu vermessenden Werkstück (10) in die für den Beginn der Messung gewünschte Lage (Abstand und Position) zu bringen. Dies ist dann gegeben, wenn wie in Figur 1a dargestellt die Oberfläche des Werkstücks (10) in der Mitte des Meßbereiches M liegt. Die beiden Pilotstrahlen (P6) und (P7) vereinigen sich dann in einem Punkt, und es ist wie in Figur Ib dargestellt ein einziger Leuchtfleck von einigen mm Durchmesser in einer Mischfarbe zu sehen.

Ist dagegen der Einstellvorgang nicht exakt durchgeführt, weil z.B. wie aus Figur 2a ersichtlich eine Kante am Werkstück (10) den Meßspot abschattet und der Detektor (4) deshalb kein Signal liefert, so wird dieser Zustand der Bedienperson durch die beiden auseinanderliegenden Auftreffpunkte der Pilotstrahlen (P6) und (P7) (siehe Figur 2b) angezeigt, die dann die notwendigen Maßnahmen ergreifen kann, um den Sensor (1) korrekt auf die Werkstückoberfläche aufzusetzen.

In Figur (3) ist ein zweites, leicht modifiziertes Ausführungsbeispiel beschrieben, das sich von dem nach Figur 1a bzw. 2a allein dadurch unterscheidet, daß der dem Abbildungsstrahlengang zugeordneten Pilotstrahlquelle (17) eine Zylinderlinse (20) vorgeschaltet ist, die in Verbindung mit dem Objektiv (13) die Lichtquelle linienförmig auf die Projektionsachse abbildet.

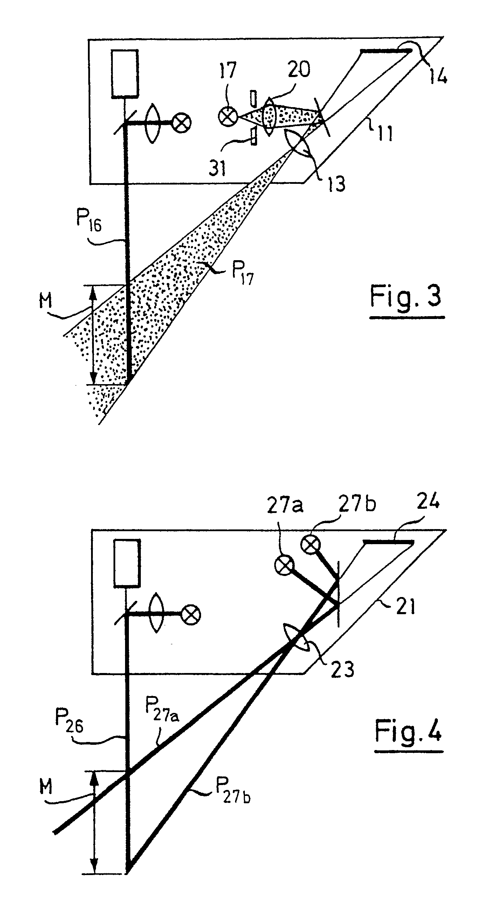

Hierdurch entsteht ein Strahlfächer, der mit einer Blende (31) so begrenzt ist, daß er den gesamten Meßbereich M ausfüllt. Bei korrekter Einrichtung des in Figur 3 mit (11) bezeichneten Sensors liegt der Auftreffpunkt des dem Meßstrahl überlagerten Pilotstrahles (16) im Bereich der Schnittlinie des Pilotstrahlfächers (17) mit der Werkstückoberfläche.

Die übrigen Bauteile des Sensors (11) sind mit denen des Sensors (1) nach Figur 1a identisch, so daß eine nochmalige Beschreibung an dieser Stelle entbehrlich ist.

Im Ausführungsbeispiel nach Figur 4 besitzt der mit (21) bezeichnete Abstandssensor zwei Pilotstrahlquellen (27a) und (27b) für den Abbildungsstrahlengang. Diese sind nebeneinander so angeordnet, daß die Achsen der von ihnen ausgehenden Pilotstrahlen (P27a) und (P27b) an den Rändern des Bildwinkelbereiches des Objektivs (23) verlaufen und damit den Pilotstrahl (P26) im Meßlichtstrahlengang am oberen und unteren Ende des Meßbereiches M schneiden. Auch in diesem Ausführungsbeispiel sind die übrigen Bauteile mit denen des Sensors (1) nach Figur 1a identisch.

## Ansprüche

1. Optoelektronischer, nach dem Triangulationsprinzip arbeitender Abstandssensor zur Bestimmung des Abstands zu einem Meßobjekt, mit einer Lichtquelle (2) für einen Meßstrahl zur Erzeugung eines Meßspots auf dem Meßobjekt und einem positionsempfindlichen photoelektrischen Empfänger (4, 14, 24), auf dem der Meßspot über einen Abbildungsutrahlengang, der zum Strahlengang des Meßstrahls geneigt ist, abgebildet wird, dadurch gekennzeichnet, daß eine weitere Lichtquelle (7) zur Erzeugung eines Pilotstrahls (P7), (P17), (P27a,b) im sichtbaren Spektralbereich vorgesehen ist, und daß der Abstandssensor so ausgebildet ist, daß der Pilotstrahl im Abbildungsskahlengang auf das Meßobjedt gerichtet verläuft.

2. Optoelektronischer Abstandssensor nach Anspruch 1, dadurch gekennzeichnet, daß die den Meßstrahl erzeugende Lichtquelle (2) im nicht sichtbaren Spektralbereich emittiert und eine dritte lichtquelle zur Erzeugung eines weiteren Pilotstrahls (P6, P16, P26) im sichtbaren Spektralbereich vorgesehen ist, wobei der Abstandssensor so ausgebildet ist, daß dieser weitere Pilotstrahl im Strahlengang der Meßstrahls und auf das Meßobjekt gerichtet verläuft.

3. Optoelektronnischer Abstandssensor nach Anspruch 1, dadurch gekennzeichnet, daß im Abbildungsstrahlengang ein einziger, den zentralen Teil des Meßbereiches markierender Pilotstrahl (P7) verläuft.

4. Optoelektronischer Abstandssensor nach Anspruch 1, dadurch gekennzeichnet, daß im Abbildungsstrahlengang zwei separate, die Ränder des Meßbereiches (M) markierende Pilotstrahlen (P27a,b) verlaufen.

5. Optoelektronischer Abstandssensor nach Anspruch 1, dadurch gekennzeichnet, daß der im Abbildungsstrahlengang verlaufende Pilotstrahl die Form eines den gesamten Meßbereich (M) überdeckenden Strahlfächers (p17) besitzt.

6. Optoelektronischer Abstandssensor nach einem der Ansprüche 2-5, dadurch gekennzeichnet, daß die Pilotstrahlen (P6, P7) voneinander verschiedene Farben aufweisen.

## Claims

1. An optoelectronic distance sensor for determining the distance to an object to be measured operating in accordance with the triangulation principle, comprising :

a light source (2) for generating a measuring beam and for producing a measuring spot on the object to be measured, and further comprising a position sensitive photoelectric receiver (4, 14, 24), onto which said measuring spot is imaged via an imaging beam path being inclined with respect to said measuring beam path, characterized by the fact that provision is made for a further light source (7) for producing a pilot beam (P7, P17, P27a,b) in the visible spectral range, and that the distance sensor is so constructed that the direction of travel of the pilot beam in the imaging beam is towards said object to be measured.

2. The optoelectronic distance sensor of claim 1, characterized by the fact that the light source (2) for generating the measuring beam emits in the non visible part of the spectrum and characterized further by a third light source for producing a second pilot beam (P6, P16, P26) in the visible spectral range, said distance sensor being so constructed that the direction of travel of said second pilot beam in the measuring beam is towards said object to be measured.

3. The optoelectronic distance sensor of claim 1, characterized by the fact that a single pilot beam (P7) for marking the central part of said measuring region is superposed to said imaging beam path.

4. The optoelectronic distance sensor of claim 1, characterized by the fact that two separate pilot beams for marking both ends of the measuring region (11) are superposed to said imaging beam path.

5. The optoelectronic distance sensor of claim 1, characterized by the fact that said pilot beam being superposed to said imaging beam path is formed as a ray fan overlapping all of said measuring region.

6. The optoelectronic distance sensor of claim 7, characterized by the fact that the colors of said pilot beams are different from each other.

## Revendications

1. Capteur de distance opto-électronique fonctionnant selon le principe de l'aérotriangulation et servant à déterminer la distance à un objet à mesurer, équipé d'une source (2) de faisceau de mesure formant un spot de mesure sur l'objet à mesurer, et d'un détecteur (14, 24), sur lequel ledit spot de mesure est formé par le faisceau de reproduction dont le trajet est incliné par rapport au trajet du faisceau de mesure, caractérisé en ce qu'une autre source de lumière est prévue pour la formation d'un faisceau directif et que le capteur de distance est conçu de façon à ce que le faisceau directif du trajet de reproduction soit aligné sur l'objet à mesurer

2. Capteur de distance opto-électronique selon la revendication 1, caractérisé en ce que la source de lumière (2) formant le faisceau de mesure émet en dehors du spectre visible et qu'une troisième source de lumière est prévue qui produit un autre faisceau directif (P6, P16, P26) dans le spectre visible, le capteur de distance étant conçu de façon à ce que cet autre faisceau directif coïncide avec le faisceau de mesure et qu'il soit aligné sur l'objet à mesurer.

3. Capteur de distance opto-électronique selon la revendication 1, caractérisé en ce que le trajet de reproduction comprend un seul faisceau directif (P7) qui marque le centre du domaine de mesure.

4. Capteur de distance opto-électronique selon la revendication 1, caractérisé en ce que le trajet de reproduction comprend deux faisceaux directifs distincts (P27a,b) qui marquent les limites du domaine de mesure (M).

5. Capteur de distance opto-électronique selon la revendication 1, caractérisé en ce que le faisceau directif du trajet de reproduction a la forme d'un éventail (P17) couvrant l'ensemble du domaine de mesure (M).

6. Capteur de distance opto-électronique selon l'une quelconque des revendications 2 à 5, caractérisé en ce que les faisceaux directifs (P6, P7) sont de couleur différente.

Fig.1a

Fig.1b

Fig.2a

Fig.2b

Fig. 3

Fig. 4